# EUROPEAN PATENT APPLICATION

(11) **EP 2 860 653 A1**
(43) Date of publication of application: **15.04.2015**
(21) Application number: 12878309.9
(22) Date of filing: 07.06.2012
(51) Int. Cl.: G06F 21/10, G06F 9/54

(54) **SECURITY ADAPTER PROGRAM AND DEVICE**

(71) Applicant: Kabushiki Kaisha Toshiba, Minato-ku Tokyo 105-8001 (JP); Toshiba Solutions Corporation, Kawasaki-shi, Kanagawa 212-8585 (JP)
(72) Inventor: TERASHITA, Yosuke, Kanagawa 212-8585 (JP); ISHIZAKI, Takashi, Kanagawa 212-8585 (JP); NAKAZATO, Chika, Kanagawa 212-8585 (JP)
(74) Representative: Hoffmann Eitle
(86) International application number: PCT/JP2012/064715
(87) International publication number: WO 2013/183150

(57) **Abstract**

A security adapter apparatus according to embodiments includes a reception means, a first manipulation means, a delivery means, and a transmission means. The reception means receives a request message that specifies a service name from the external application unit. The first manipulation means searches the first storage unit based on the service name in the received request massage and manipulates the request message so that the request message contains an application name resulting from the search as a destination. The delivery means delivers the manipulated request message to a first common bus. The transmission means transmits a transmission message to the external application unit when the transmission message is received from one of the internal application units via a bus connection adaptor and the first common bus.

## Description

### Technical Field

Embodiments of the present invention relate to a security adapter program and a security adapter apparatus.

### Background Art

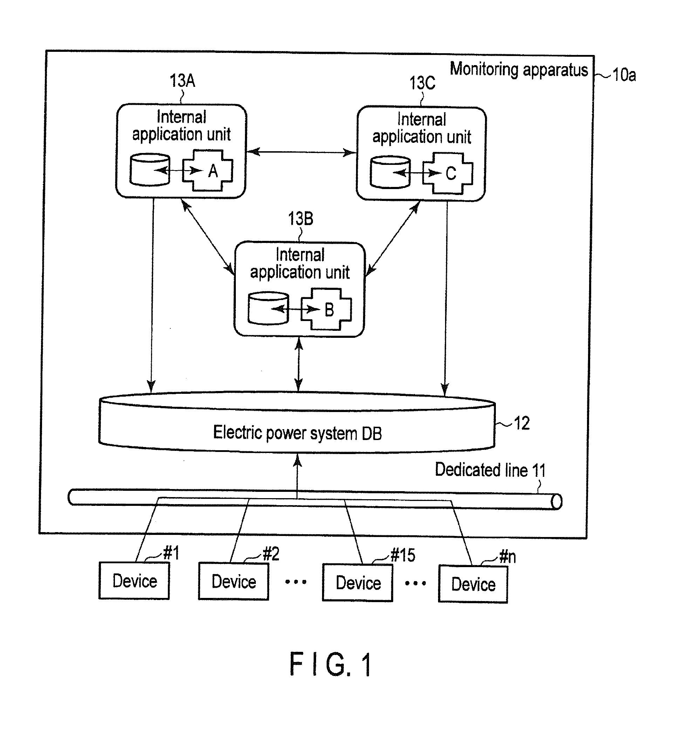

FIG. 1 is a schematic diagram depicting a monitoring apparatus and a peripheral configuration of the monitoring apparatus in a conventional electric power system. In the conventional electric power system, a plurality of devices #1 to #n transmit data to a monitoring apparatus 10, and a monitoring apparatus 10a saves the data to a power line DB 12 via a dedicated line 11. A processor not depicted in the monitoring apparatus 10a functions as a plurality of internal application units 13A to 13C by executing a plurality of internal application programs A to C (hereinafter referred to as internal applications A to C) in a memory not depicted in the drawings. The plurality of internal application units 13A to 13C appropriately read data from the power line DB 12 and transmit and receive a message containing the data to and from one another.

As described above, in the conventional electric power system, mainly the internal application units 13A to 13C cooperate directly with one another, and thus, messages are transmitted and received using a scheme unique to each of the internal applications 13A to 13C. Such a scheme is referred to as a mutual indirect connection scheme.

In recent years, developments in smart communities have led to the need for cooperation even of internal applications, in which a plurality of applications need to cooperate with one another or with an external application.

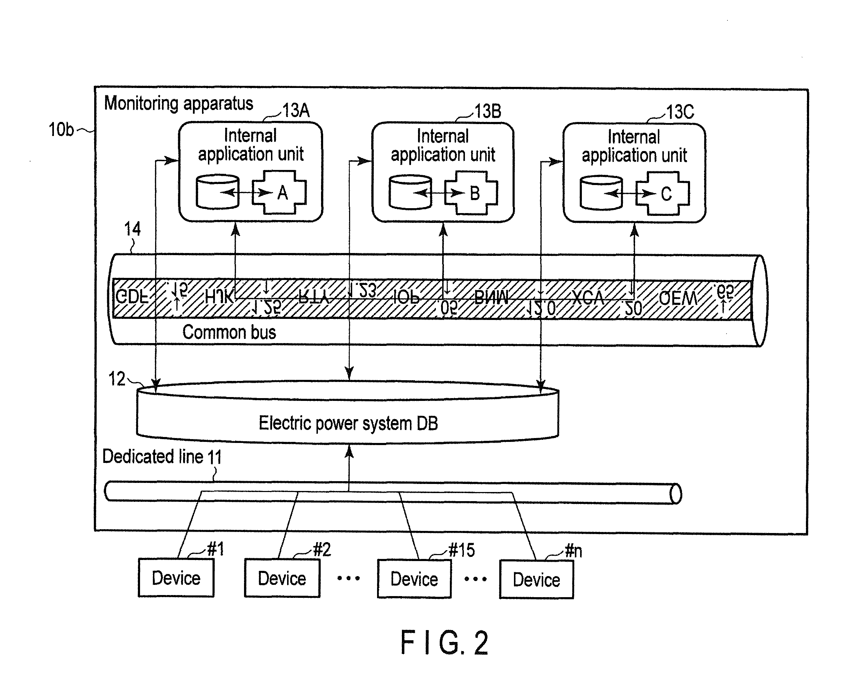

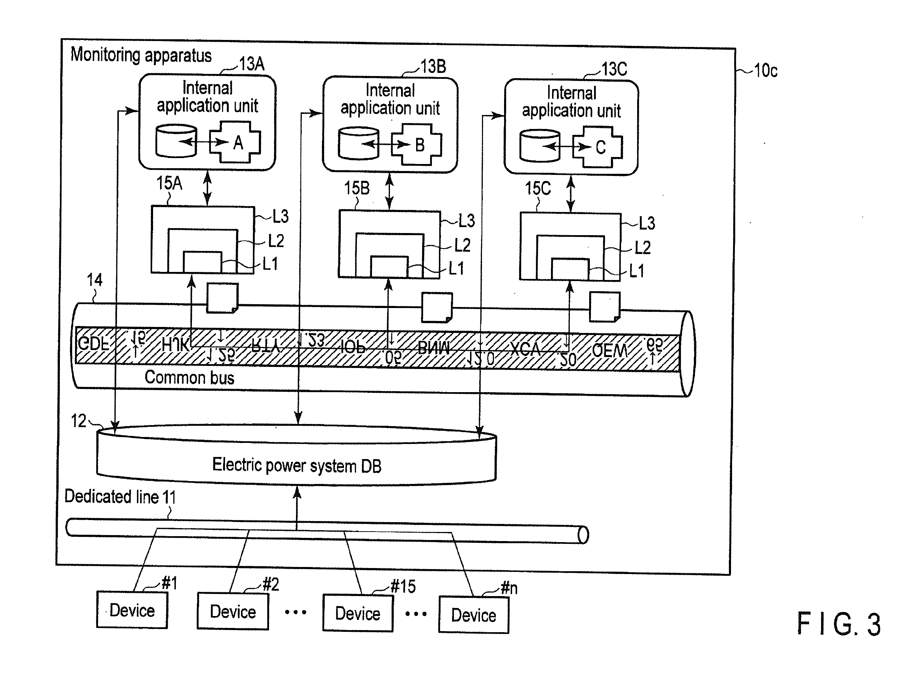

Thus, in message queuing between applications, as depicted in FIG. 2, messages are transmitted and received via a common bus 14 in the monitoring apparatus 10b. Subsequently, in cooperation utilizing the common bus, messages are transmitted and received via a plurality of bus connection adapters 15A to 15C in a monitoring apparatus 10c as depicted in FIG. 3. Such a scheme is referred to as a common bus scheme.

Each of the bus connection adapters 15A to 15C comprises a messaging layer L1, a connecting layer L2, and an adapter layer L3. The messaging layer L1 has a function to transmit and receive a message. The connecting layer L2 has a function to connect to the common bus 14. The adapter layer L3 has a function to manipulate a message and a function to cooperate with an existing system.

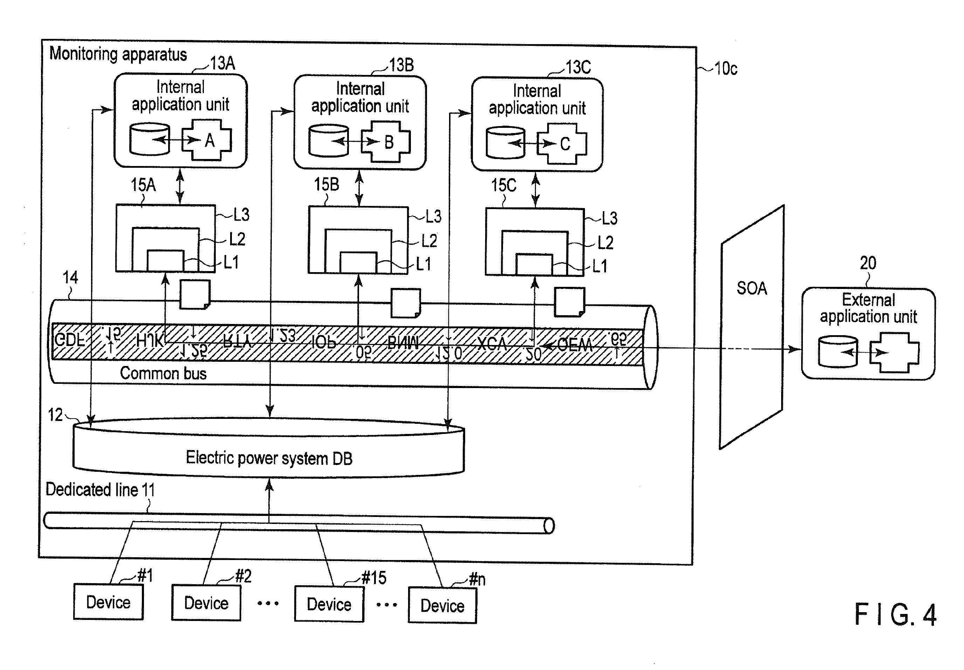

In a recent message queuing scheme, as depicted in FIG. 4, a service-oriented architecture (hereinafter referred to as SOA) is used to enable an external application unit 20 to directly access the internal application units 13A to 13C via the common bus 14 in the monitoring apparatus 10c. The external application unit 20 is a functional unit implemented by a processor in an external apparatus (not depicted in the drawings) by executing an external application program (hereinafter referred to as an external application) in a memory in the external apparatus.

### Citation List

### Patent Literature

Patent Literature 1: Jpn. Pat. Appln. KOKAI Publication No. 2009-213238

### Summary of Invention

### Technical Problem

However, in the scheme depicted in FIG. 4, when the external application unit 20 invokes any of the internal applications A to C, the external application unit 20 directly invokes the internal application. Thus, the contents of processing and data in the internal applications A to C may leak to the outside. Furthermore, in the scheme depicted in FIG. 4, the internal applications A to C are identified and may thus be attacked.

A solution to such problem of the present invention is to provide a security adapter program and a security adapter apparatus which, when an external application accesses an internal application, allow leakage of the contents of processing and data in the internal application and identification of the internal application to be prevented.

A security adapter program according to the embodiments is stored in a computer-readable storage medium, and is used for a monitoring apparatus comprising a data storage unit, a plurality of internal application units, a first common bus, and a plurality of bus connection adapters.
the monitoring apparatus executes the security adaptor program.

The data storage unit stores data received from a plurality of devices.

The plurality of internal application units mutually transmit and receive a message containing data stored in the data storage unit.

The first common bus is a bus configured to be able to transmit a message between the internal applications.

The plurality of bus connection adaptors individually connect the internal application units to the first common bus.

The monitoring apparatus further comprises first storage means.

The first storage means stores service names each indicative of a type of processing executed by a corresponding one of the internal application units in association with application names that identify the respective internal application units.

The security adaptor program is a program for causing the monitoring apparatus to further function as a security adaptor means provided in an interventional manner for communication between each of the internal application units and the external application unit.

The security adaptor means includes a reception means, a first manipulation means, a delivery means, and a transmission means.

The reception means receives a request message that specifies the service name from the external application unit.

The first manipulation means searches the first storage means based on the service name in the received request massage and manipulates the request message so that the request message contains an application name resulting from the search as a destination.

The delivery means delivers the manipulated request message to the first common bus so as to transmit the manipulated request message to the internal application unit identified by the application name indicated as the destination.

The transmission means transmits a transmission message to the external application unit when the transmission message is received from one of the internal application units via the bus connection adaptor and the first common bus.

### Brief Description of Drawings

FIG. 1 is a schematic diagram depicting a monitoring apparatus and a peripheral configuration of the monitoring apparatus in a conventional electric power system.
FIG. 2 is a schematic diagram illustrating a conventional common bus scheme.
FIG. 3 is a schematic diagram illustrating a conventional common bus scheme.
FIG. 4 is a conventional schematic diagram illustrating a message queuing scheme using an SOA.
FIG. 5 is a schematic diagram generally illustrating the embodiments.
FIG. 6 is a schematic diagram depicting a monitoring apparatus to which a security adaptor program according to a first embodiment is applied and a peripheral configuration of the monitoring apparatus.
FIG. 7 is a schematic diagram illustrating an authentication DB according to the first embodiment.
FIG. 8 is a schematic diagram illustrating a modification of the first embodiment.
FIG. 9 is a schematic diagram depicting an example of a message that has not been manipulated yet according to the first embodiment.
FIG. 10 is a schematic diagram depicting an example of a message that has been manipulated according to the first embodiment.
FIG. 11 is a schematic diagram generally illustrating operations according to the first embodiment.
FIG. 12 is a schematic diagram depicting operations according to the first embodiment.
FIG. 13 is a flowchart illustrating operations according to the first embodiment.
FIG. 14 is a flowchart illustrating operations according to the first embodiment.
FIG. 15 is a schematic diagram depicting an example of data according to the first embodiment.
FIG. 16 is a schematic diagram depicting an example of data according to the first embodiment.
FIG. 17 is a schematic diagram depicting an example of data according to the first embodiment.
FIG. 18 is a schematic diagram depicting an example of data according to the first embodiment.
FIG. 19 is a schematic diagram depicting an example of data according to the first embodiment.
FIG. 20 is a schematic diagram depicting a monitoring apparatus to which a security adaptor program according to a second embodiment is applied and a peripheral configuration of the monitoring apparatus.
FIG. 21 is a schematic diagram depicting a monitoring apparatus to which a security adaptor program according to a third embodiment is applied and a peripheral configuration of the monitoring apparatus.
FIG. 22 is a flowchart illustrating operations according to the third embodiment.
FIG. 23 is a schematic diagram depicting a monitoring apparatus to which a security adaptor program according to a fourth embodiment is applied and a peripheral configuration of the monitoring apparatus.

### Description of Embodiments

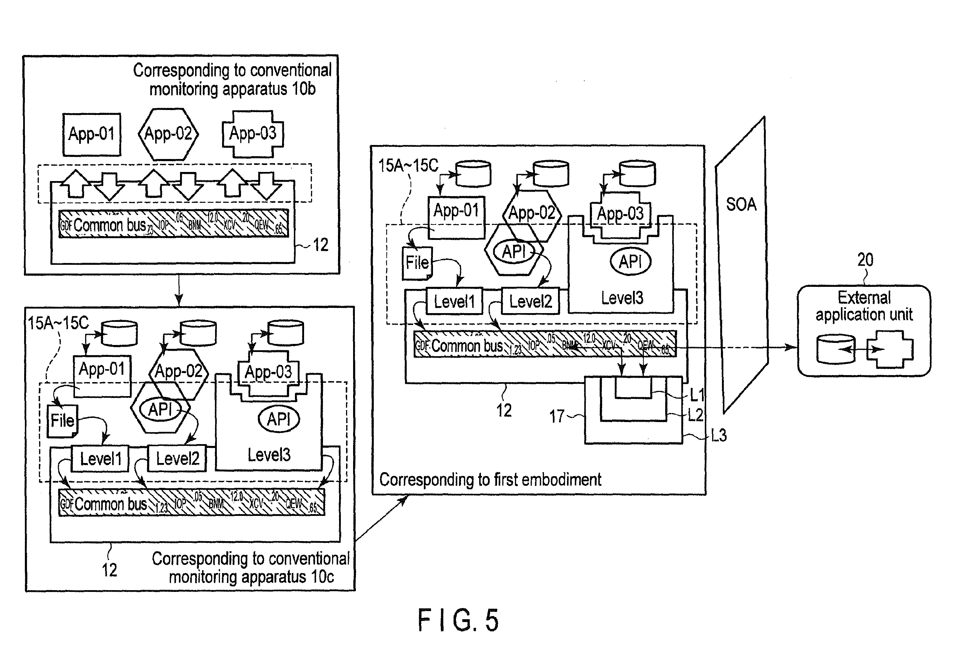

Embodiments will be described below with reference to the drawings. Before the description, a summary common to the embodiments will be given with reference to FIG. 5.

A conventional electric power system performs message queuing among applications utilizing a common bus 12 as described above.

Applications are roughly classified into three patterns (App-01) to (App-03).

(App-01) Applications in a first pattern are traditional applications used for know-how management of data.

(App-02) Applications in a second pattern are applications developed in an open environment and involve external interfaces.

(App-03) Applications in a third pattern are value-added next-generation applications developed in the future.

Applications in the three patterns need to cooperate organically with one another in providing service in response to a request from an external application unit 20.

The bus connection adapters 15A to 15C deliver a message to one another at one of the following three levels (Level 1) to (Level 3) in accordance with each of the application patterns.

(Level 1) Messages are delivered using files.

(Level 2) Messages are delivered by invoking the external application.

(Level 3) Messages are delivered by invoking an API (Application Program Interface).

Furthermore, as described above, the electric power system allows the external application unit 20 and internal applications A to C to cooperate with one another using an SOA.

However, as described above, when the external application unit 20 accesses any of the internal applications A to C, leakage of the contents of processing and data in the internal applications A to C and identification of the internal applications A to C need to be prevented.

Thus, according to the embodiments, when the external application accesses the internal application, a configuration with an intervening security adapter 17 prevents leakage of the contents of processing and data in the internal application and identification of the internal application.

The security adaptor 17 may be replaced with any name such as a electric power system adapter, a power line security gateway, a security gateway.

A summary common to the embodiments has been given. Now, the embodiments will be sequentially specifically described starting with a first embodiment.

### <First Embodiment>

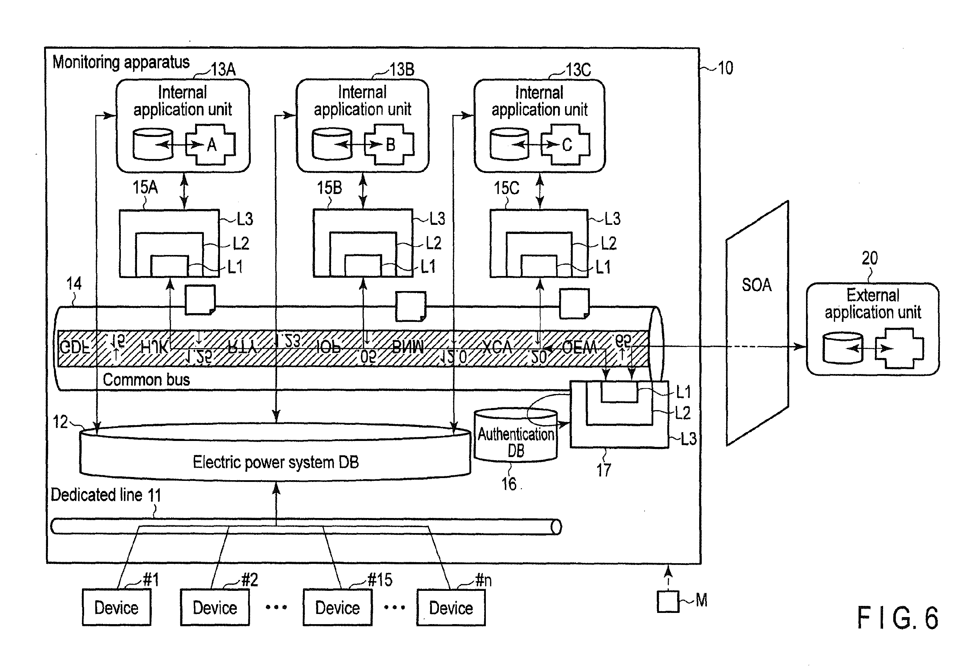

FIG. 6 is a schematic diagram depicting a monitoring apparatus to which a security adaptor program according to the first embodiment is applied and a peripheral configuration of the monitoring apparatus. Components of the first embodiment which are the same as corresponding components of the configuration depicted in FIG. 4 and FIG. 5 are denoted by the same reference numerals and will not be described below in detail. Mainly differences from the configuration in FIG. 4 and FIG. 5 will be described below. Also, in the embodiments below, duplicate descriptions are omitted. The components of the first embodiment which are the same as corresponding components of the configuration depicted in FIG. 4 and the like are a power line DB (data storage unit) 12, a plurality of internal applications 13A to 13C, a common bus (first common bus) 14, and a plurality of bus connection adapters 15A to 15C, all of which are included in a monitoring apparatus 10. Furthermore, the power line DB 12 stores data received from a plurality of devices #1 to #n. The plurality of internal application units 13A to 13C transmit and receive a message containing data stored in the power line DB 12 to and from one another. The common bus (first common bus) 14 is a bus configured to be able to transmit a message between the internal application units 13A to 13C. The plurality of bus connection adaptors 15A to 15C individually connect the internal application units 13A to 13C to the first common bus 14.

That is, compared to the configuration depicted in FIG. 4 and the like, the first embodiment further comprises a security adaptor 17 provided in an interventional manner for communication between each of the internal application units 13A to 13C and the external application unit 20. The security adaptor 17 references an authentication DB 16.

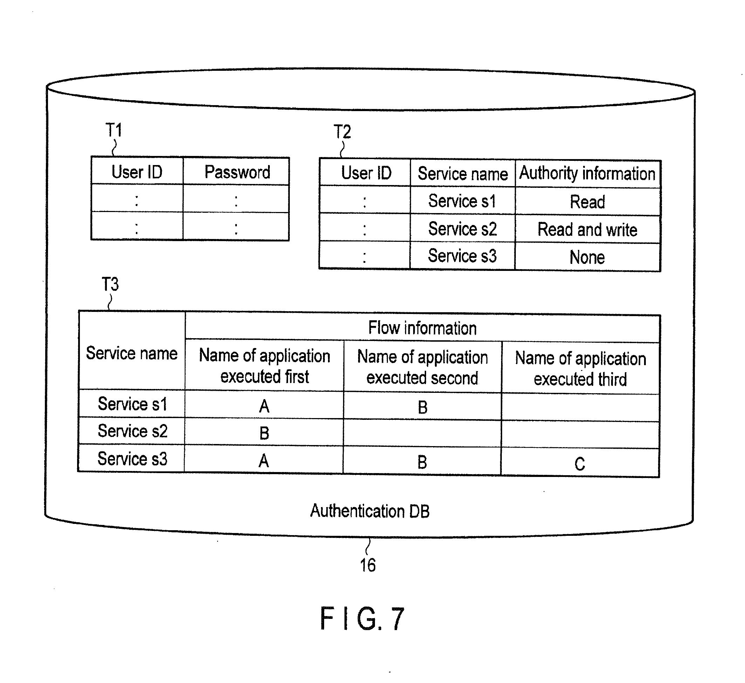

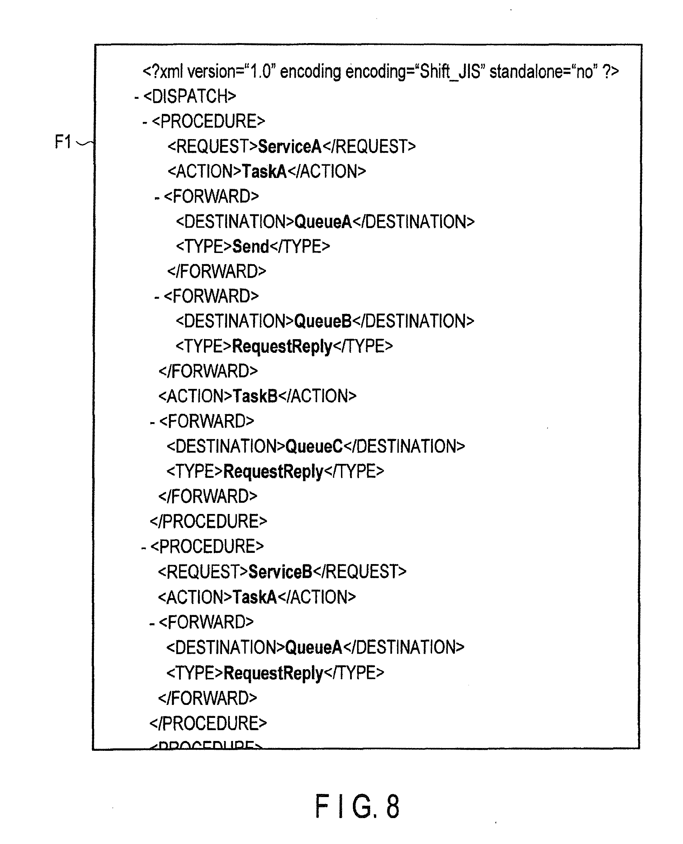

The authentication DB 16 is a storage unit on which the security adaptor 17 can perform reading and writing. As depicted in FIG. 7, the authentication DB 16 stores an authentication table T1, an authority table T2, and a flow table T3. The authentication table T1 and the authority table T2 are optional additional matters and may be omitted. Setting of the tables T1 to T3 is pre-performed by the security adaptor 17 via an administrator's operation. Furthermore, instead of the authentication DB 16, a memory may be used in which an XML file F1 describing the contents of the tables T1 to T3 in an XML form is stored as depicted in FIG. 8.

The authentication table T1 is information describing a user ID that identifies a user operating the external application unit 20 and a password that authenticates the user.

The authority table T2 is information describing the user ID, a service name, and authority information indicative of the user's authority in association with one another.

The flow table T3 is information describing service names indicative of the types of processing executed by the respective internal application units 13A to 13C in association with application names A to C that identify the internal application units 13A to 13C, respectively. The application names in the flow table T3 are described along an execution sequence for each service name. A set of the application names described along the execution sequence is referred to as flow information.

On the other hand, the security adaptor (security adaptor means) 17 is a functional unit implemented by a processor in the monitoring apparatus 10 (not depicted in the drawings) by executing a security adaptor program in a memory not depicted in the drawings. In other words, the security adaptor 17 can be implemented using a combined configuration of a hardware resource and software. The software may be a security adaptor program installed in a computer of the monitoring apparatus 10 via a network or a non-transitory computer-readable storage medium to allow the computer to implement the functions of the security adaptor 17, as depicted in FIG. 6, FIG. 20, FIG. 21, and FIG. 23. However, the security adaptor 17 is not limited to the combined configuration of a hardware resource and software but may be implemented as a security adaptor apparatus of a hardware configuration.

The security adaptor 17 has, for example, functions (f17-1) to (f17-4) described below.

(f17-1) A reception function to receive a request message specifying a service name from the external application unit.

(f17-2) A first manipulation function to search the authentication DB 16 based on the service name in the received request massage and to manipulate the request message so that the request message contains an application name resulting from the search as a destination.

(f17-3) A delivery function to deliver the manipulated request message to the common bus 14 so that the manipulated request message is transmitted to the internal application unit (for example, 13A) identified by the application name indicated as the destination.

(f17-4) A transmission function to transmit a transmission message to the external application unit 20 upon receiving the transmission message from one (for example, the internal application unit 13A) of the internal application units 13A to 13C via the bus connection adapter (for example, 15A) and the common bus 14.

The security adaptor 17 may further provide, for example, functions (f17-5) to (f17-7) described below.

(f17-5) An authentication function to authenticate the validity of a request message by matching a user ID and a password in the request message with a user ID and a password in the authentication DB 16 when the request message with the user ID, the password, and a service name is received by the reception function (f17-1).

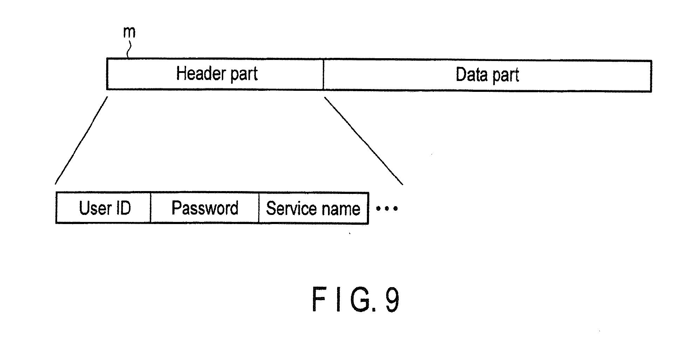

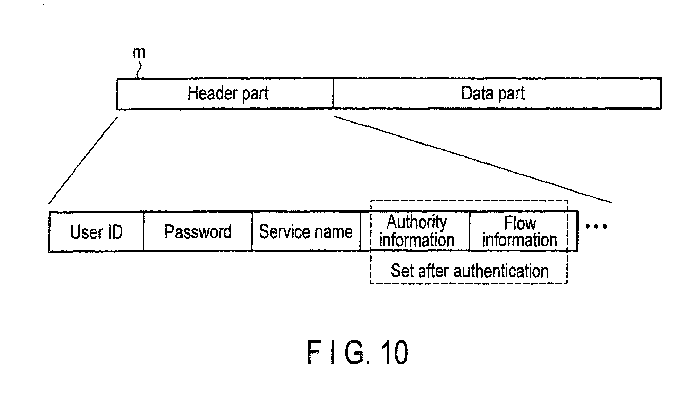

(f17-6) A second manipulation function to search the authentication DB 16 based on the service name in the successfully authenticated request message and to manipulate the request message so that the request message contains authority information resulting from the search. FIG. 9 depicts a message m that has not been processed by the first manipulation function (f17-3) or the second manipulation function (f17-6), and FIG. 10 depicts the manipulated message m. In an example depicted in FIG. 9 and FIG. 10, authority and flow information is set in a header part of the message m. However, the first embodiment is not limited to this, and the authority and flow information may be set in a data part of the message m.

(f17-7) An inhibition function to inhibit the first manipulation function (f17-2) and the delivery function (f17-3) from being performed when the authentication fails.

The security adaptor 17 may comprise, for example, a message layer L1, a connecting layer L2, and an adapter layer L3 as described above. The messaging layer L1 has the message reception function (f17-1) and transmission function (f17-4). The connecting layer L2 has the functions (f17-3), (f17-5), and (f17-7) to connect to the common bus 14. The adapter layer L3 has the functions (f17-2) and (f17-6) for message manipulation and cooperation with an existing system.

Now, operations of the monitoring apparatus with the security adaptor configured as described above will be described. First, the operations will be described in brief. The external application unit 20 transmits a request message that utilizes the SOA to the security adaptor 17. The security adaptor 17 references the authentication DB 16 to authenticate the request message and invokes any of the internal applications A to C that is associated with the request message.

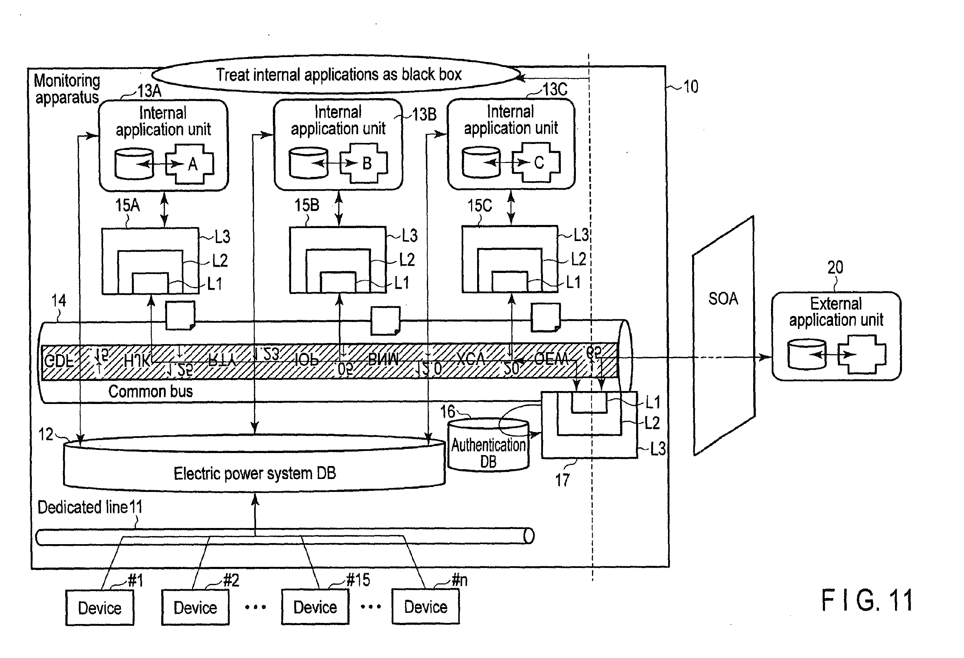

The operations of the security adaptor 17 allow the following effects (i) to (v) to be exerted.
(i) The request message from the external application unit 20 can be authenticated. Furthermore, the authentication allows the user's authority to be checked to control accesses to the internal applications A to C.
(ii) As depicted in FIG. 11, only the security adaptor 17 is visible to the external application unit 20, allowing internal processing to be concealed. That is, the internal applications A to C can be treated as black boxes.
(iii) Only the security adaptor 17 is visible to the external application unit 20, preventing confidential data from leaking to the outside.
(iv) Only the security adaptor 17 is visible to the external application unit 20, allowing the internal applications A to C to be prevented from being attacked.
(v) The contents of processing in the internal applications A to C can be easily changed in response to the request message from the external application unit 20. For supplemental description, the security adaptor 17 controls invoking of the internal applications A to C based on flow information. Thus, for example, rewriting the flow information allows an invoking target internal application to be easily switched from A to B in response to the same request message.

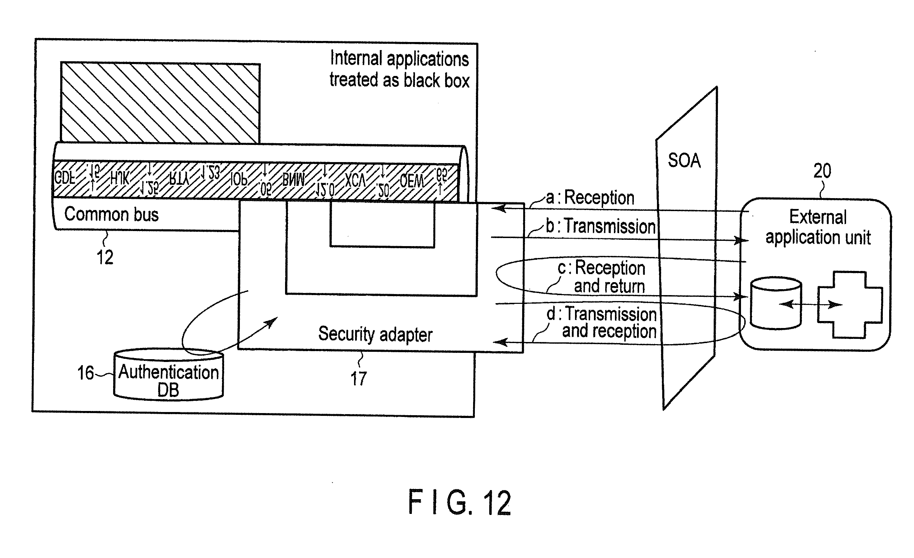

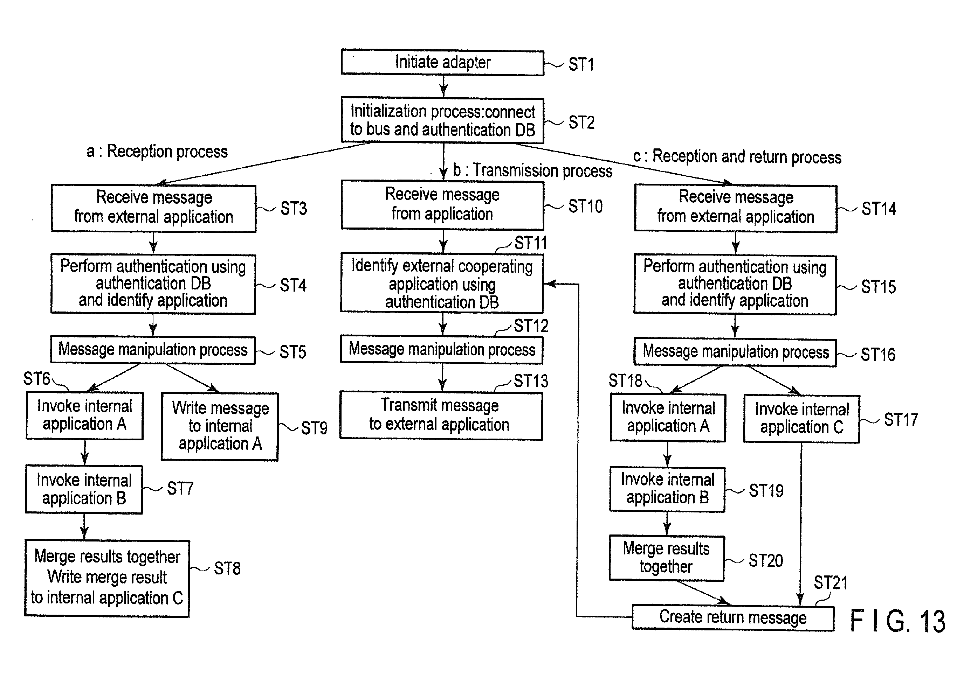

The operations have been described in brief. Now, the operations of the security adaptor 17 will be described with reference to a schematic diagram and flowcharts in FIGS. 12 to 14.

Patterns of cooperation with the external application unit 20 (transmission and reception of a message) include four operations [a] to [d] as depicted in FIG. 12 and as described below.
[a] Reception of a message from the external application unit 20.
[b] Transmission of a message to the external application unit 20.
[c] Reception of a message by the external application unit 20 and return of a message from the external application unit 20 (request and reply type).
[d] Transmission to and reception by the external application unit 20 (request and reply type).

The operations will be sequentially described below.

First, steps ST1 and ST2 common to the four operations [a] to [d] will be described.

In the monitoring apparatus 10, a processor not depicted in the drawings starts executing the security adaptor program to initiate the security adaptor 17 (ST1).

The security adaptor 17 executes a process of connecting to the common bus 14 and the authentication DB 16 (ST2).

Subsequently, steps ST3 to ST9 regarding the operation [a] of a message reception process will be described. The operation [a] assumes the case of example 1 or example 2 described below.

Example 1: A message is periodically received from the external application unit 20 and saved to the internal application unit 13A or 13C.

Example 2: A message containing data such as the amount of energy used, the amount of energy generated, and the like is acquired from monitoring target devices #1 and #2 at a constant period, and the data is extracted from the message and saved to an internal database (example: the power line DB 12).

It is assumed, after step ST2, that the security adaptor 17 receives a message from the external application unit 20 (ST3). The received message is assumed to be a request message that specifies a service name. The request message may further contain a user ID and a password.

The security adaptor 17 decrypts the received message and accesses the authentication DB 16 to perform authentication. The security adaptor 17 further determines the type of the application and identifies an application to be invoked (ST4) . Specifically, the security adaptor 17 matches the user ID and password in the received request message with the user ID and password in the authentication table T1 to authenticate the validity of the request message. Furthermore, the security adaptor 17 searches the flow table T3 in the authentication DB 16 based on the service name in the received request message to obtain an application name resulting from the search. The service name is indicative of the type of an application. The application to be invoked is identified by the application name obtained.

Furthermore, the security adaptor 17 manipulates the message (ST5).

Specifically, the security adaptor 17 manipulates the request message so that the request message contains the application name obtained in step ST4 as a destination. When authentication is performed, the security adaptor 17 searches the authority table T2 in the authority DB 16 based on the service name in the successfully authenticated request message, and manipulates the request message so that the request message contains authority information resulting from the search. When the authentication fails, the security adaptor 17 does not execute steps ST5 to ST9.

When a plurality of applications cooperate with one another as a result of the manipulation process, the security adaptor 17 invokes the internal application A along an order in the flow information (ST6) and receives a processing result from the internal application unit 13A. Subsequently, the security adaptor 17 invokes the internal application B along the order in the flow information (ST7) and receives a processing result from the internal application unit 13B.

Subsequently, the security adaptor 17 merges the processing results received in steps ST6 and ST7 together and writes a merge result to the internal application unit 13C (ST8).

Furthermore, when only one application is invoked as a result of the manipulation process in step ST5, the security adaptor 17 delivers the processed message to, for example, the internal application unit 13A. Specifically, the security adaptor 17 delivers the manipulated request message to the common bus 14 so that the manipulated request message is transmitted to the internal application unit 13A identified by the application name.

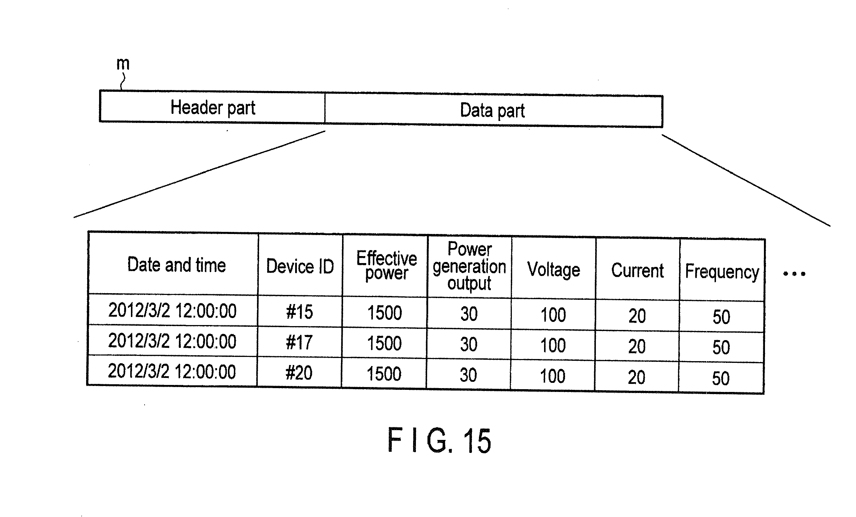

The internal application unit 13A writes the data in the delivered message to the internal application unit 13A (ST9). The data written in step ST9 is, for example, data on the devices obtained on a particular date at a particular time (example: devices ID, effective power, power output, and the values of voltage and frequency) as depicted in FIG. 15.

Now, steps ST10 to ST13 regarding the operation [b] of a message transmission process will be described. In the operation [b], the case of example 3 or example 4 described below is assumed.

Example 3: A message and an instruction are transmitted to the external application unit 20.

Example 4: Abnormality in the devices #1 to #n to be monitored is detected, and an error message and an action instruction indicative of the abnormality are transmitted.

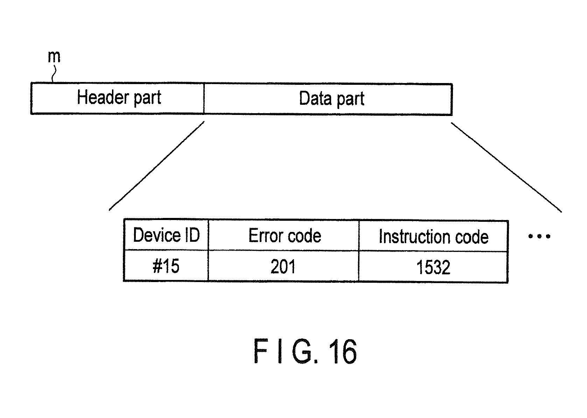

It is assumed that, after step ST2, the security adaptor 17 receives a message from one (for example, the internal application unit 13A) of the internal application units 13A to 13C via the bus connection adapter 15A and the common bus 14 (ST10). The message is assumed to be a transmission message sent to the external application unit 20. The message contains, for example, a device ID indicative of the device in which the abnormality has been detected, an error code corresponding to an error message, and an instruction code corresponding to an action instruction, all of which are contained in the data part, as depicted in FIG. 16.

The security adaptor 17 decrypts the received message, accesses the authentication DB 16, and searches the flow information, for example, based on the service name in the message. The security adaptor 17 identifies the external application unit 20 based on an application name indicative of the external application unit 20 associated with a service name in the flow information matching the service name in the message (ST11).

Furthermore, the security adaptor 17 executes message manipulation such as an encryption process based on an identification result (ST12). The encryption process uses, for example, a public key for the identified external application unit.

Then, the security adaptor 17 transmits the message manipulated in step ST12 to the external application unit 20 (ST13). However, the manipulation may be omitted in step ST12. In either case, the security adaptor 17 transmits the transmission message received in step ST10 to the external application unit 20.

Now, steps ST14 to ST21 regarding the operation [c] of a message reception and transmission process will be described. The operation [c] assumes the case of example 5 or example 6 described below.

Example 5: Data needed for a request from the external application unit 20 are returned.

Example 6: A request for data such as a plan of power supply and demand is made by the external application unit 20 and result data are returned to the requester. When the request is received, the request message is authenticated. When the authentication succeeds, the result is transmitted to the external application unit 20.

It is assumed that, after step ST2, the security adaptor 17 receives a message from the external application unit 20 (ST14).

The security adaptor 17 decrypts the received message and accesses the authentication DB 16 to perform authentication. The security adaptor 17 further determines the type of the application to identify the application to be invoked (ST15).

Furthermore, the security adaptor 17 manipulates the message (ST16).

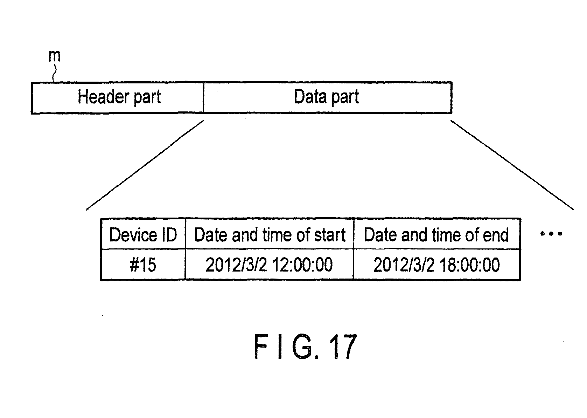

When one application is invoked as a result of the manipulation process, the security adaptor 17 delivers the data in the message and invokes, for example, the internal application C (ST17). The internal application unit 13C, operated in response to the invoking, reads from the power line DB 12 based on the delivered data and delivers read result data to the security adaptor 17. The data in the message includes, for example, a device ID, the date and time of start, and the date and time of end all of which are used to specify requested data and contained in the data part, as depicted in FIG. 17.

When a plurality of applications cooperate with one another as a result of the manipulation process, the security adaptor 17 invokes the internal application A along the order in the flow information (ST18) and receives a processing result from the internal application unit 13A. Subsequently, the security adaptor 17 invokes the internal application B along the order in the flow information (ST19) and receives a processing result from the internal application unit 13B.

Subsequently, the security adaptor 17 merges the processing results received in steps ST18 and ST19 together (ST20).

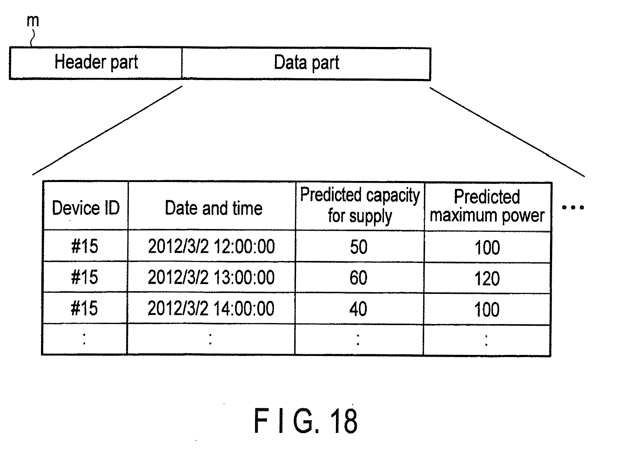

The security adaptor 17 creates a return message containing the data delivered in step ST17 or data merged in step ST20 (ST21). The data include, for example, specified device IDs and hourly data during the date and time of start and the date and time of end (example: device IDs, date and time, and the values of predicted capacity for supply and predicted maximum power) as depicted in FIG. 18. The capacity for supply as used herein means the ability to generate power. The maximum power means the maximum value of power utilized by the devices.

Now, steps ST22 to ST29 regarding the operation [d] of a message transmission and reception process will be described. The operation [d] assumes the case of example 7 or example 8 described below.

Example 7: A request is made to the external application unit 20 to acquire needed data.

Example 8: Information on the devices (effective power, power generation output, voltage, current, frequency, and the like) over a given period is acquired from the external application unit 20.

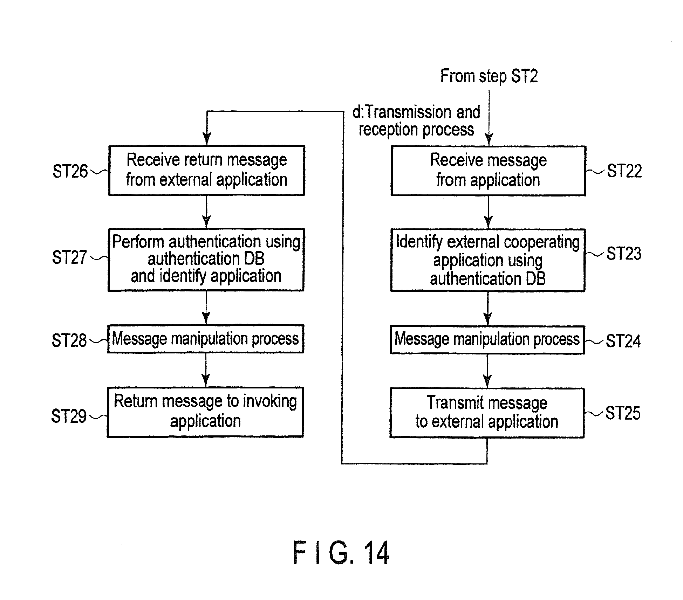

It is assumed that, after step ST2, the security adaptor 17 receives a message from one of the internal application units 13A to 13C as depicted in FIG. 14 (ST22). The message contains, for example, device IDs indicative of the devices from which data are to be acquired, and the date and time of start and the date and time of end indicating a given period, all of which are contained in the data part, as depicted in FIG. 17.

The security adaptor 17 decrypts the received message, accesses the authentication DB 16, and searches the flow information, for example, based on the service name in the message. The security adaptor 17 identifies the external application unit 20 based on an application name indicative of the external application unit 20 associated with a service name in the flow information matching the service name in the message (ST23).

Furthermore, the security adaptor 17 executes message manipulation such as an encryption process based on an identification result (ST24). The encryption process uses, for example, a public key for the identified external application unit 20.

After step ST24, the security adaptor 17 transmits the message manipulated in step ST24 to the external application unit 20 (ST25).

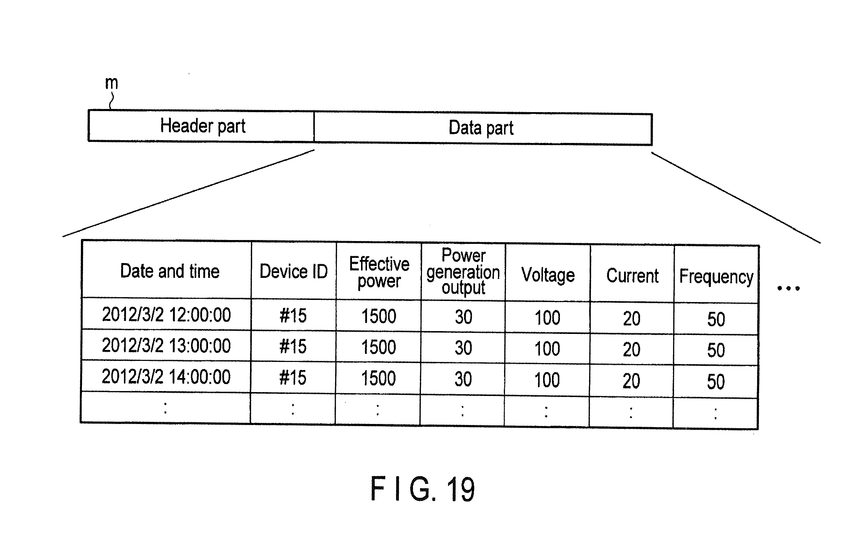

Subsequently, the security adaptor 17 receives a message from the external application unit 20 (ST26). The received message contains, for example, device IDs indicative of the devices from which data are to be acquired and hourly data obtained between the date and time of start and the date and time of end (example: device IDs, date and time, and the values of predicted capacity for supply and predicted maximum power) as depicted in FIG. 19.

The security adaptor 17 decrypts the received message and accesses the authentication DB 16 to perform authentication. The security adaptor 17 further determines the type of the application to identify an application to be invoked (ST27).

Furthermore, the security adaptor 17 manipulates the message (ST28).

Additionally, the security adaptor 17 returns the message to the application identified in step S27 (ST29).

As described above, according to the first embodiment, the security adaptor 17 is provided in an interventional manner for communication between each of the internal application units 13A to 13C and the external application unit 20. Thus, when the external application accesses the internal application, leakage of the contents of processing and data in the internal application and identification of the internal application can be prevented.

Supplementarily, the cooperation between the internal applications A to C and the external application unit 20, which utilizes the SOA, inevitably involves the security adaptor 17. Only the security adaptor 17 is visible to the external application unit 20.

The security adaptor 17 authenticates a connection from the external application unit 20 to invoke the needed internal application A, ... This allows the following effects (1) to (4) to be exerted.

(1) The mechanisms (algorithms) of the internal applications A to C are prevented from leaking to the outside.

In the electric power system, when the external application unit 20 enters into cooperation with the internal applications A to C, the mechanisms of the internal applications A to C are laid open to the external application unit 20. According to the first embodiment, only the security adaptor 17 is visible to the external application unit 20, allowing the mechanisms of the internal applications A to C to be concealed from the outside.

(2) Internal data such as device IDs are prevented from leaking to the outside.

In the electric power system, when the plurality of internal application units 13A to 13C enter into cooperation with the external application unit 20, the results of processing in the plurality of internal application units 13A to 13C may be returned to the external application unit 20. Thus, in-process data flowing through the internal application units 13A to 13C need to be prevented from leaking directly to the external application unit 20. According to the first embodiment, only the security adaptor 17 is visible to the external application unit 20, allowing the in-process data flowing through the internal application units 13A to 13C to be concealed from the outside.

(3) The internal applications A to C are concealed and protected from external attack.

In the electric power system, when the external application unit 20 and each of the internal applications A to C cooperate with each other, the internal applications A to C are located. According to the first embodiment, only the security adaptor 17 is visible to the external application unit 20. Thus, the locations of the internal applications A to C are concealed, allowing the internal applications A to C to be protected from external attack.

(4) The security adaptor 17 checks the user's authority to control accesses to the internal applications A to C.

The electric power system needs to authenticate a request message from the external application unit 20. According to the first embodiment, the security adaptor 17 receives a request message from the external application unit 20 to authenticate the request message and check the authority. Thus, appropriate access control for the internal application units 13A to 13C can be achieved.

### <Second Embodiment>

Now, a second embodiment will be generally described.

In general, an external application unit 20 utilizes an SOA to access a security adaptor 17 via a common bus 14 and can thus identify even the common bus 14 and the security adaptor 17. Consequently, the security adaptor 17 may cause an unforeseen situation such as leakage of the contents of processing or an attack on applications.

Thus, in order to enhance security, the second embodiment duplicates the common bus 14 so that only a common bus dedicated to external applications is visible to the external application unit 20.

This allows even the security adaptor 17 to be concealed from the outside. Connections with the duplicate common bus can be established using a routing function.

The second embodiment has been generally described. Now, the second embodiment will be specifically described.

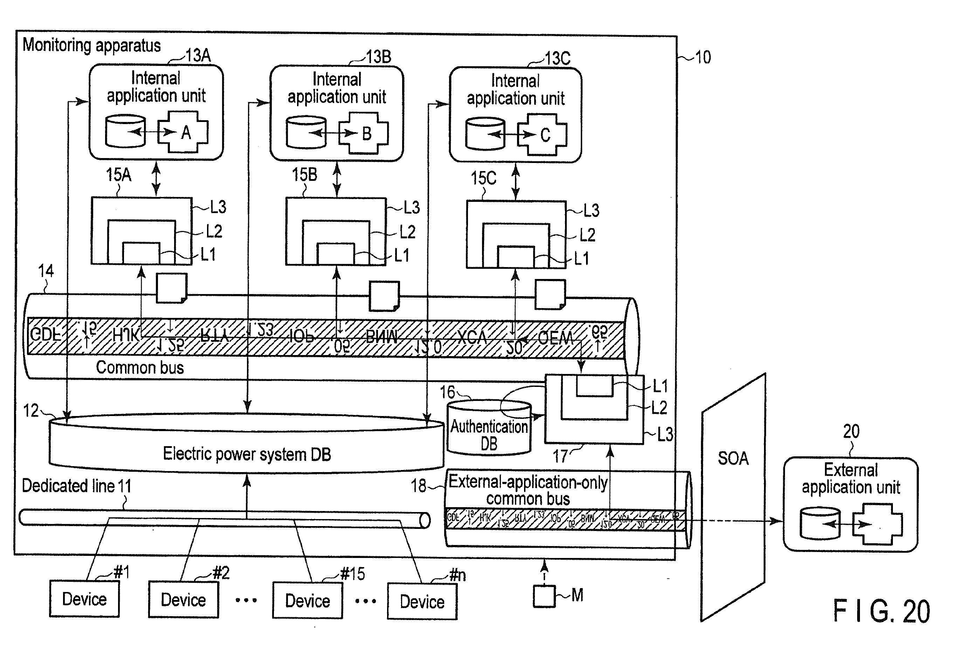

FIG. 20 is a schematic diagram depicting a monitoring apparatus to which a security adaptor program according to the second embodiment is applied and a peripheral configuration of the monitoring apparatus.

The second embodiment is a modification of the first embodiment. According to the second embodiment, a monitoring apparatus 10 further comprises an external-application-only common bus (second common bus) 18 via which a request message and a transmission message can be individually transmitted between the security adaptor 17 and the external application unit 20.

In this case, a reception function (f17-1) of the security adaptor 17 receives the request message from the external application unit 20 via an external-application-only common bus 18.

A transmission function (f17-4) of the security adaptor 17 transmits the transmission message to the external application unit 20 via the external-application-only common bus 18.

In the above-described configuration, the external application unit 20 can identify only the external-application-only common bus 18, thus allowing security to be further enhanced. That is, in this configuration, the external-application-only common bus 18 is provided between the security adaptor 17 and the external application unit 20. The second embodiment thus not only exerts the same effects as those of the first embodiment but also conceals the security adaptor 17, the common bus 14, and internal application units 13A to 13C from the external application unit 20. Thus, the contents of processing and processing data can be more firmly concealed.

### <Third Embodiment>

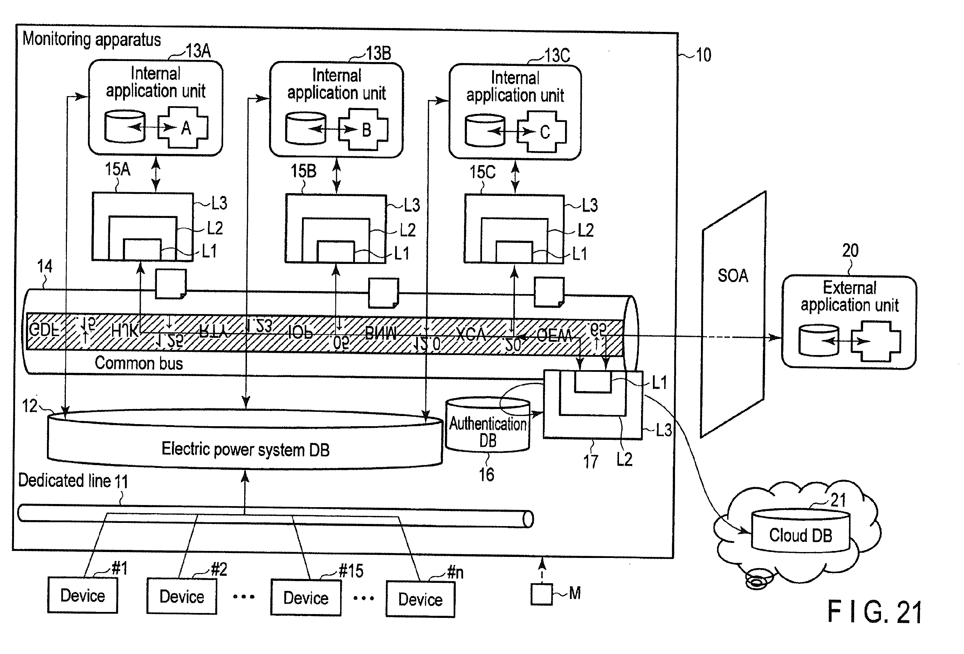

FIG. 21 is a schematic diagram depicting a monitoring apparatus to which a security adaptor program according to a third embodiment is applied and a peripheral configuration of the monitoring apparatus.

The third embodiment is a modification of the first embodiment. According to the third embodiment, a security adaptor 17 is configured to be able to transmit a transmission message to an external cloud DB 21.

Specifically, a transmission function (f17-4) of the security adaptor 17 has the following functions (f17-4-1) to (f17-4-3).

(f17-4-1) A determination function to determine whether a transmission message contains a result requested in a request message when the transmission message is received.

(f17-4-2) A first transmission function to transmit the transmission message to a predetermined cloud DB (external cloud storage means) 21 when the transmission message is determined to contain the requested result.

After the transmission to the cloud DB 21, the first transmission function can transmit a transmission result report indicative of, for example, a "success" or an "error" to an external application unit 20.

(f17-4-3) A second transmission function to transmit the transmission message to the external application unit 20 when the transmission message is determined not to contain the requested result.

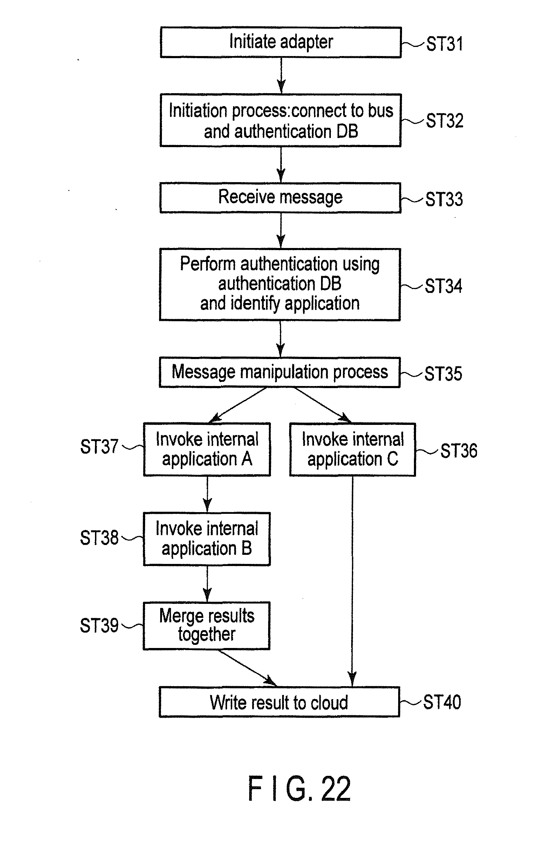

Now, operations of processing executed by the security adaptor 17 configured as described above will be described below with reference to a flowchart in FIG. 22.

In a monitoring apparatus 10, the security adaptor 17 is initiated by a processor not depicted in the drawings by executing the security adaptor program (ST31).

The security adaptor 17 connects to a common bus 14 and an authentication DB 16 in an initialization process (ST32).

It is assumed that, after step ST32, the security adaptor 17 receives a message from the external application unit 20 (ST33). The message is assumed to be a request message. Furthermore, data in the request message is assumed to include, for example, a device ID and the date and time of start and the date and time of end all of which are used to specify requested data and contained in a data part, as depicted in FIG. 17.

The security adaptor 17 decrypts the received message and accesses an authentication DB 16 to perform authentication. The security adaptor 17 further determines the type of the application to identify an application to be invoked (ST34).

Furthermore, the security adaptor 17 manipulates the message (ST35).

When only one application is invoked as a result of the manipulation process, the security adaptor 17 delivers the data in the message and invokes, for example, an internal application C (ST36). The internal application unit 13C, operated in response to the invoking, reads from a power line DB 12 based on the delivered data and delivers read result data to the security adaptor 17.

When a plurality of applications cooperate with one another as a result of the manipulation process, the security adaptor 17 invokes an internal application A along an order in flow information (ST37) and receives a processing result from the internal application unit 13A. Subsequently, the security adaptor 17 invokes an internal application B along the order in the flow information (ST38) and receives a processing result from an internal application unit 13B.

Subsequently, the security adaptor 17 merges the processing results received in steps ST37 and ST38 together (ST39).

Upon receiving a transmission message containing data delivered in step ST36 and data resulting from the merge in step ST39, the security adaptor 17 determines whether or not the transmission message contains the result requested in the request message. When the transmission message is determined to contain the requested result, the security adaptor 17 transmits the transmission message to an external cloud DB 21 to write the data in the transmission message to the cloud DB 21 (ST40). The data include, for example, a specified device ID and hourly data obtained between the date and time of start and the date and time of end (example: device IDs, date and time, and the values of predicted capacity for supply and predicted maximum power) as depicted in FIG. 18.

The security adaptor 17 transmits the transmission message to the external application unit 20 when the message is determined not to contain the requested result.

As described above, according to the third embodiment, the security adaptor 17 transmits the requested result to the cloud DB 21 without returning the result to the external application unit 20. Thus, the third embodiment not only exerts the same effects as those of the first embodiment but also allows the external application unit 20 to access an authentication system in the cloud DB 21 to check the result.

Supplementarily, in this configuration, the cloud DB 21 to which processing results are written is preset in the security adaptor 17 so that the data in the cloud DB 21 are updated in accordance with the result of processing for a request from the external application unit 20. This allows various external application units 20, ... to access the cloud DB 21 and enables a reduction in the load of a message manipulation process (encryption and other types of processing) involved in returning of data. The external application units 20, ... are authenticated by the authentication system in the cloud DB 21 and can check the result written to the cloud DB 21.

Furthermore, according to the third embodiment, the authentication system in the cloud DB 21 allows data accesses to be controlled. Moreover, writing to the cloud DB 21 allows security to be enhanced.

### <Fourth Embodiment>

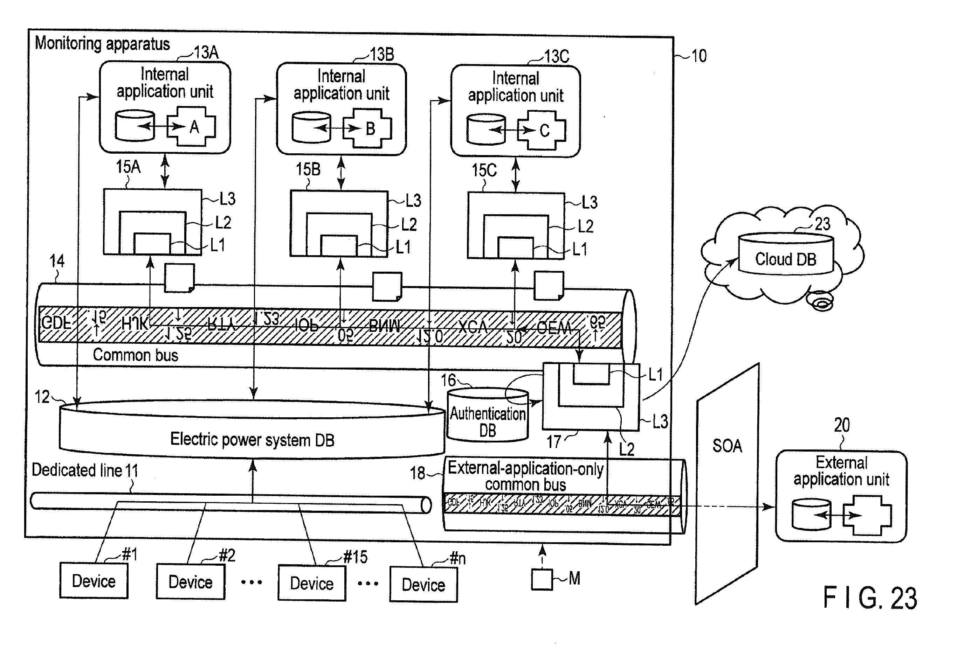

FIG. 23 is a schematic diagram depicting a monitoring apparatus to which a security adaptor program according to a fourth embodiment is applied and a peripheral configuration of the monitoring apparatus.

The fourth embodiment is a modification of the second and third embodiments resulting from combining the second and third embodiments. According to the fourth embodiment, a monitoring apparatus 10 comprises an external-application-only common bus (second common bus) 18 via which a request message and a transmission message can be individually transmitted between a security adaptor 17 and an external application unit 20. Furthermore, the security adaptor 17 is configured to be able to transmit the transmission message to an external cloud DB 21.

The above-described configuration allows the effects of the second and third embodiments to be exerted.

According to at least one of the above-described embodiments, the security adaptor 17 is provided in an interventional manner for communication between each of the internal application units and the external application unit 20. Thus, the embodiment can prevent leakage of the contents of processing and data in the internal application unit and identification of the internal application unit when the external application accesses the internal application.

The method described in each embodiment can also be stored in a storage medium such as a magnetic disk (floppy™ disk, hard disk, or the like), an optical disk (CD-ROM, DVD, or the like), a magneto-optical disk (MO), or a semiconductor memory as a program which can be executed by a computer and distributed.

As the storage medium, any configuration which is a computer-readable storage medium in which a program can be stored may be used regardless of a storage format.

An OS (operating system) which operates on a computer on the basis of an instruction of a program installed from the storage medium in the computer, database management software, and MW (middleware) such as network software may execute a part of the processes to realize the embodiment.

Furthermore, the storage medium according to each embodiment includes not only a medium independent of a computer but also a storage medium in which a program transmitted through a LAN, the Internet, or the like is downloaded and stored or temporarily stored.

The number of storage media is not limited to one. A case in which the process in each embodiment is executed from a plurality of media is included in the storage medium according to the present invention. Any medium configuration may be used.

A computer according to each embodiment is to execute the processes in each embodiment on the basis of the program stored in a storage medium. The computer may have any configuration such as one apparatus constituted by a personal computer or a system in which a plurality of apparatuses are connected by a network.

A computer in each embodiment includes not only a personal computer but also an arithmetic processing apparatus, a microcomputer, or the like included in an information processing apparatus. The computer is a generic name of an apparatus and a device which can realize the functions of the present invention by a program.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A security adaptor program which is stored in a computer-readable storage medium, and which is used for a monitoring apparatus comprising a data storage unit configured to store data received from a plurality of devices, a plurality of internal application units configured to mutually transmit and receive a message containing data stored in the data storage unit, a first common bus configured to be able to transmit a message among the internal application units, and a plurality of bus connection adapters configured to individually connect the internal application units to the first common bus, the monitoring apparatus executing the security adaptor program,
wherein the monitoring apparatus further comprises a first storage means configured to store service names each indicative of a type of processing executed by a corresponding one of the internal application units in association with application names that identify the internal application units,
the security adaptor program causes the monitoring apparatus to further function as a security adaptor means provided in an interventional manner for communication between each of the internal application units and the external application unit, and
the security adaptor means includes:
a reception means configured to receive a request message that specifies the service name from the external application unit;
a first manipulation means configured to search the first storage means based on the service name in the received request message and to manipulate the request message so that the request message contains an application name resulting from the search as a destination;
a delivery means configured to deliver the manipulated request message to the first common bus so that the manipulated request message is transmitted to the internal application unit identified by the application name indicated as the destination; and
a transmission means configured to transmit a transmission message to the external application unit when the transmission message is received from one of the internal application units via the bus connection adapter and the first common bus.

2. The security adaptor program according to Claim 1, wherein the monitoring apparatus further comprises:
a second storage means configured to store a user ID that identifies a user operating the external application unit in association with a password that allows the user to be authenticated; and
a third storage means configured to store the user ID, the service name, and authority information indicative of the user's authority, and
the security adaptor means further includes
an authentication means configured to authenticate the validity of the request message containing the user ID, the password, and the service name by matching the user ID and the password in the request message with the user ID and the password in the second storage means when the request message is received by the reception means;
a second manipulation means configured to search the third storage means based on the service name in the successfully authenticated request message and to manipulate the request message so that the request message contains the authority information resulting from the search; and
an inhibition means configured to inhibit processing executed by the first manipulation means and the delivery means when the authentication fails.

3. The security adaptor program according to Claim 1 or Claim 2, wherein the monitoring apparatus further comprises a second common bus configured to enable the request message and the transmission message to be transmitted between each of the reception and transmission means and the external application unit,
the reception means is configured to receive the request message from the external application unit via the second common bus, and
the transmission means is configured to transmit the transmission message to the external application unit via the second common bus.

4. The security adaptor program according to one of Claims 1 to 3, wherein the transmission means includes:
a determination means configured to determine whether or not the transmission message contains a result requested in the request message upon receiving the transmission message;
a first transmission means configured to transmit the transmission message to predetermined external cloud storage means when the transmission message is determined to contain the requested result; and
a second transmission means configured to transmit the transmission message to the external application unit when the transmission message is determined not to contain the requested result.

5. A security adaptor apparatus used for a monitoring apparatus comprising a data storage unit configured to store data received from a plurality of devices, a plurality of internal application units configured to mutually transmit and receive a message containing data stored in the data storage unit, a first common bus configured to be able to transmit a message among the internal application units, and a plurality of bus connection adapters configured to individually connect the internal application units to the first common bus, the security adaptor apparatus comprising security adaptor means provided in an interventional manner for communication between each of the internal application units and the external application unit,
wherein the monitoring apparatus further comprises a first storage means configured to store service names each indicative of a type of processing executed by a corresponding one of the internal application units in association with application names that identify the internal application units, and
the security adaptor means includes:
a reception means configured to receive a request message that specifies the service name from the external application unit;
a first manipulation means configured to search the first storage means based on the service name in the received request message and to manipulate the request message so that the request message contains an application name resulting from the search as a destination;
a delivery means configured to deliver the manipulated request message to the first common bus so that the manipulated request message is transmitted to the internal application unit identified by the application name indicated as the destination; and
a transmission means configured to transmit a transmission message to the external application unit when the transmission message is received from one of the internal application units via the bus connection adapter and the first common bus.
